## Europäisches Patentamt
## European Patent Office
## Office européen des brevets

(19)

(11) Numéro de publication: **0 010 334**
**B1**

(12) **FASCICULE DE BREVET EUROPEEN**

(45) Date de publication du fascicule du brevet: **15.09.82**

(51) Int. Cl.³: **F 27 B 9/20, C 21 D 9/00, H 05 B 6/00, B 65 G 25/04**

(21) Numéro de dépôt: **79200589.4**

(22) Date de dépôt: **15.10.79**

(54) Installation de chauffage par induction pour barres.

(30) Priorité: **18.10.78 FR 7829616**

(43) Date de publication de la demande:
**30.04.80 Bulletin 80/9**

(45) Mention de la délivrance du brevet:
**15.09.82 Bulletin 82/37**

(84) Etats contractants désignés:
**BE DE FR GB IT**

(56) Documents cités:
**FR - A - 859 649**
**FR - A - 1 400 420**
**GB - A - 585 416**

(73) Titulaire: **ELPHIAC Société anonyme dite:**
**54, Chaussée de Charleroi**
**B-1060 Bruxelles (Saint-Gilles) (BE)**

(72) Inventeur: **Renier, Théodore Albert Joseph**
**Piepestraat 18**
**B-3788 Riemst (BE)**
Inventeur: **Pons, Charles Léopold Joseph**
**Rue Jule Cralle, 210 A**
**B-4030 Grivegnee (BE)**

(74) Mandataire: **Bossard, Franz et al,**
**ACEC - Service des Brevets Boîte Postale 4**
**B-6000 Charleroi (BE)**

Courier Press, Leamington Spa, England.

Installation de chauffage par induction pour barres

La présente invention a pour objet une installation de chauffage par induction pour barres comprenant au moins un inducteur et au moins un dispositif pour faire avancer une barre à travers l'inducteur ou les inducteurs en un mouvement hélicoïdal composé d'un mouvement de translation axial combiné avec un mouvement de rotation autour de l'axe de la barre.

Dans de telles installations connues, le dispositif pour faire avancer la barre en un mouvement hélicoïdal est constitué par une rangée de galets ou cylindres rotatifs dont l'axe inclut un angle déterminé avec l'axe de la barre de sorte que la barre avance en direction axiale et exécute en même temps un mouvement de rotation autour de son axe. Lorsque les hélices décrites ainsi par les points sur la surface latérale de la barre doivent présenter un pas relativement petit, l'angle entre l'axe de la barre et l'axe des cylindres d'entraînement doit être choisi très petit. Dans ce cas, cependant, la moindre imprécision sur cet angle a pour conséquence une variation sensible de la vitesse du mouvement de translation. D'autre part, les frictions entre la barre et les cylindres d'entraînement obliques constituent une autre source d'imprécisions pour le mouvement hélicoïdal de la barre.

L'invention a pour but une installation de chauffage par induction de ce genre présentant toute garantie pour un mouvement hélicoïdal continu et constant des points sur la surface de la barre à chauffer.

Un autre but de l'invention est une possibilité de régler de manière précise la vitesse d'avancement d'une part et le pas du mouvement hélicoïdal d'autre part.

Pour réaliser ces buts, l'installation de chauffage par induction pour barres suivant l'invention est caractérisée en ce que le dispositif pour faire avancer la barre à travers l'inducteur ou les inducteurs en un mouvement de translation axial combiné avec un mouvement de rotation autour de l'axe de la barre est constitué par un mécanisme transformant un mouvement rotatif d'un arbre tournant à vitesse constante en un mouvement de va et vient comprenant des phases à vitesse constante, par au moins un équipage de translation auquel est communiqué ce mouvement, et part un support annulaire, maintenu dans un palier de l'équipage de translation et animé d'un mouvement rotatif à vitesse constante.

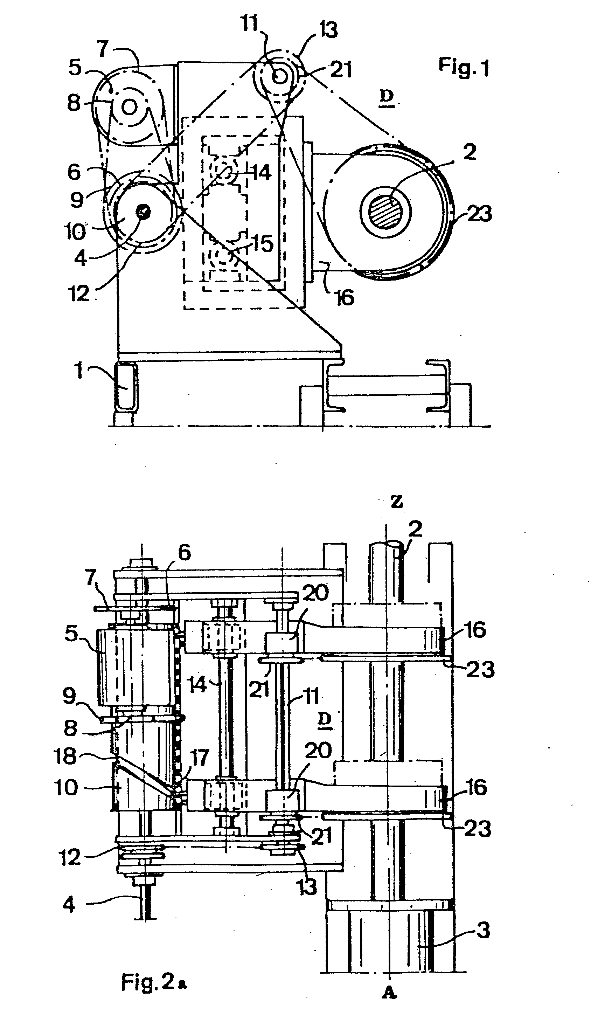

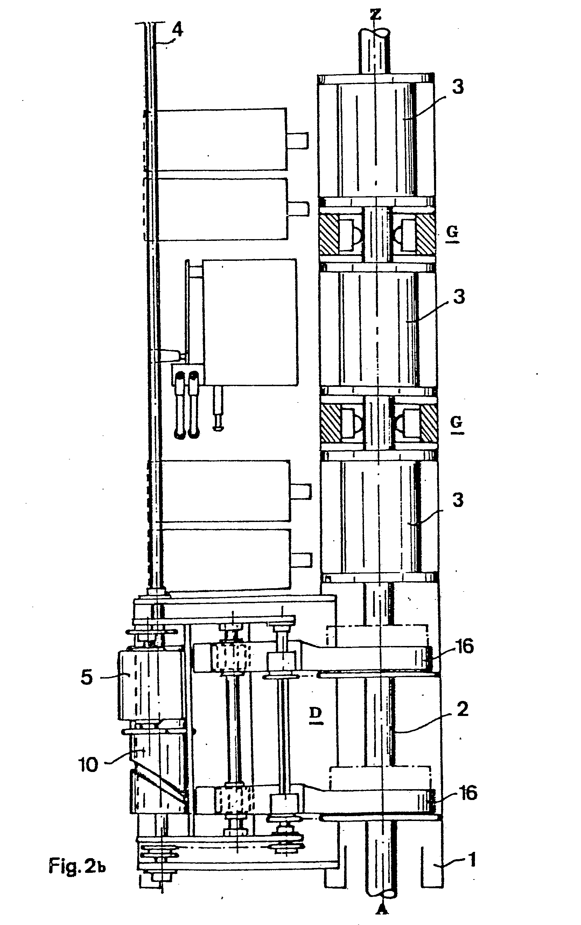

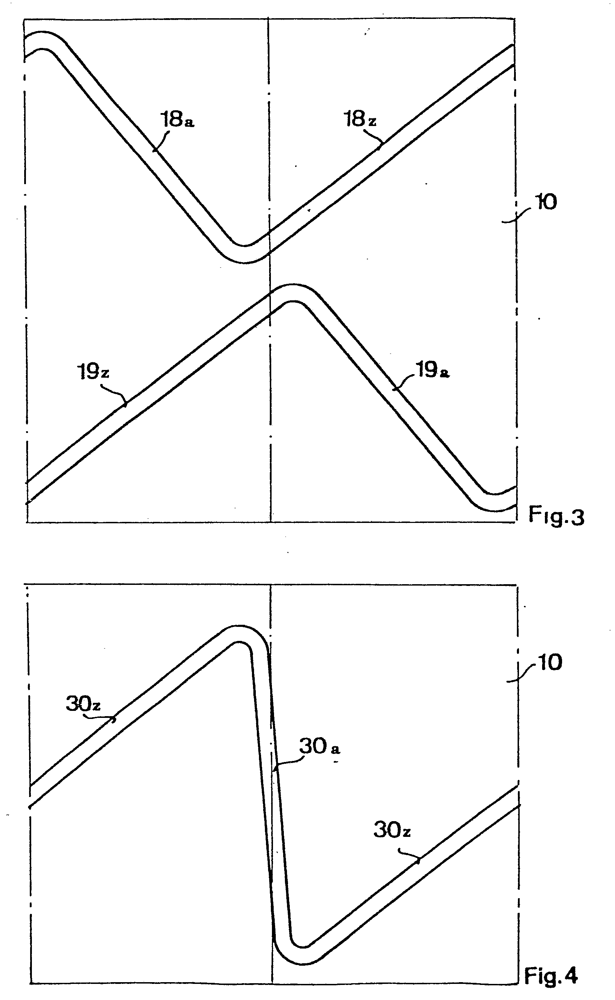

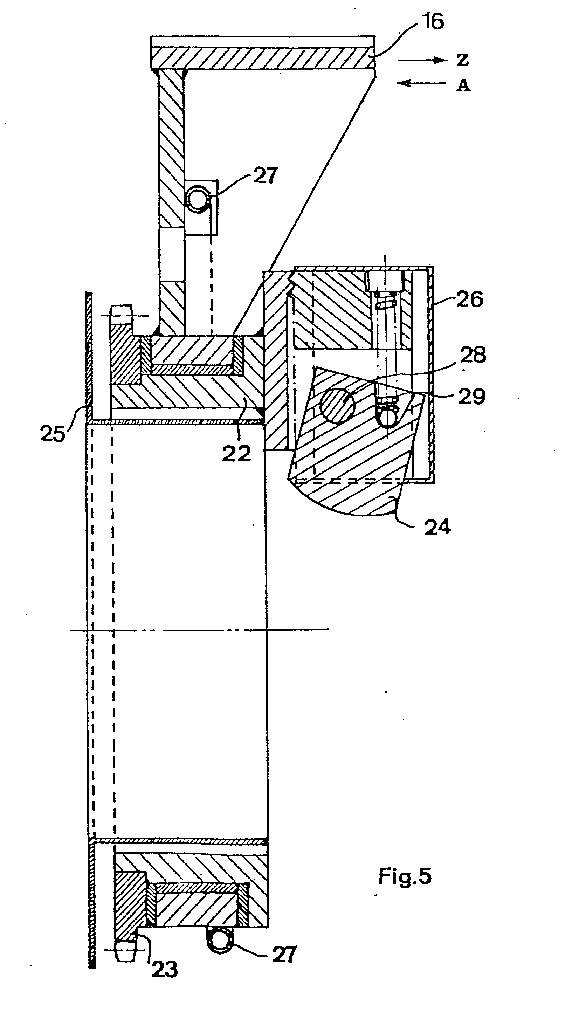

D'autres caractéristiques de l'invention apparaîtront au cours de la description ci-dessous, relative à un exemple d'une forme d'exécution de l'invention représentée au dessin annexé. Dans ce dessin, une installation suivant l'invention est montrée en élévation à la figure 1, vue en direction de l'axe d'une barre à chauffer. La figure 2 est une vue en plan de l'installation. En raison de la grande longueur de l'installation, cette figure 2 est subdivisée en deux parties consécutives fig. 2a et fig. 2b. La figure 3 montre le développement de la surface d'une came cylindrique à rainures. La figure 4 montre une variante de la figure 3. La figure 5 représente une vue en coupe d'une partie d'un équipage mobile.

Les figures 1, 2, 3 et 5 se rapportent à une seule et même installation. Un bâti 1 supporte alignés suivant un chemin de guidage A—Z pour une barre 2 plusieurs inducteurs 3, en l'occurrence trois, un ou plusieurs dispositifs D pour faire avancer la barre 2, une ou plusieurs couronnes de guidage G, ainsi que des appareils et accessoires non repérés, nécessaires au fonctionnement de l'installation et bien connus en soi, mais ne faisant pas partie de l'invention. La barre 2 entre à froid ou déjà préchauffée du côté amont A et sort chaude de l'installation du côté aval Z. Côté amont A, la barre peut par exemple sortir encore chaude d'un laminoir. Côté aval Z, la barre chauffée à une température désirée subit un traitement thermique ou toute autre opération.

L'installation suivant l'invention comprend un arbre principal 4 mû par un moto-variateur électrique, non représenté. Cet arbre 4 peut actionner différents dispositifs D pour faire avancer la barre 2. Sur le dessin, l'arbre 4 est représenté comme un arbre mécanique s'étendant sur toute la longueur de l'installation. Suivant une variante, non représentée, l'arbre 4 peut aussi être un arbre électrique réalisant par exemple l'asservissement à la même vitesse de divers moteurs d'entraînement, chacun disposé à l'endroit d'un dispositif D pour l'avancement de la barre.

Sur le dessin, dans chaque dispositif D, l'arbre 4 entraîne un réducteur 5 au moyen d'une transmission à chaîne par l'intermédiaire de deux roues à chaîne 6 et 7. La sortie du réducteur 5 porte une autre roue à chaîne 8 faisant partie d'une autre transmission vers une roue à chaîne 9, solidaire d'une came à surface cylindrique 10. D'autre part, l'arbre 4 entraîne un arbre cannelé 11 au moyen d'une transmission comprenant une roue à chaîne 12 sur l'arbre 4 et une roue à chaîne 13 sur l'arbre cannelé 11. L'arbre cannelé 11, ainsi que deux guides 14 et 15 sont supportés par le bâti du dispositif D qui peut se confondre avec le bâti 1 de l'installation et servent de support, à leur tour, à deux équipages mobiles de translation identiques. Chaque équipage 16 est muni d'un éperon 17 maintenu engagé dans une des deux rainures 18 et 19 creusées dans la surface cylindrique de la came 10. Au niveau de l'arbre cannelé 11, chaque équipage 16 présente une crapaudine annulaire à travers laquelle passe l'arbre cannelé 11. Dans la crapaudine est emprisonné, avec la possibilité de tourner, un manchon 20 coulissant sur l'arbre cannelé et supportant une roue à chaîne 21. Au niveau du chemin A—Z de la barre 2, chaque équipage 16 présente un palier supportant de manière rotative un anneau support 22 pour une roue à chaîne 23 d'une part et les mordaches 24 d'une pince d'autre part. La figure 5 montre en coupe longitudinale l'extrémité d'un équipage 16 supportant la pince. Trois mordaches 24, dont une seule est visible sur le dessin, sont disposées sur le pourtour de l'anneau support 22 visible sur le dessin.

Si nécessaire, des écrans protecteurs 25 et 26 sont fixés à une certaine distance de l'anneau support 22 pour éviter un échauffement par une barre 2 portée au rouge. De plus, un tube d'eau de refroidissement 27 entoure le palier de l'anneau 22. Les mordaches 24 pivotent autour d'un axe 28 sous l'influence d'un ressort 29. Ils se dégagent automatiquement d'une barre 2 lorsque le mouvement de l'équipage mobile 16 va en direction amont (flèche A) et ils se bloquent sur la barre 2 lorsque le mouvement de l'équipage mobile est dirigé vers l'aval (flèche Z).

Dans l'installation décrite ci-dessus, les transmissions à chaîne peuvent évidemment être remplacées par toute autre transmission adéquate, par exemple à courroie, à engrenages, ou dans certains cas par des transmissions électromagnétiques.

Chaque dispositif D fonctionne comme suit: l'arbre 4 entraîne d'une part d'une mouvement de rotation constant et continu mais réglable, l'arbre cannelé 11 et d'autre part, avec une vitesse beaucoup plus lente, via le réducteur 5, la came 10. Grâce aux éperons 17 des équipages mobiles 16 engagés dans les rainures 18 et 19 de la came 10, les équipages mobiles 16 exécutent des mouvements de va et vient. Lors de ces mouvements, les manchons 20 coulissent sur l'arbre cannelé 11 et sont entraînés à la vitesse de rotation de l'arbre cannelé 11. Grâce à la transmission réalisée au moyen des roues à chaîne 21 et 23, ce mouvement de rotation est communiqué au support annulaire 22 des mordaches 24 de la pince enserrant la barre 2.

Le mouvement de translation de la barre 2 est commandé par le mouvement des équipages 16 déterminé par la forme des rainures 18 et 19 de la came 10 (figure 3). Les rainures 18 et 19 sont de forme identique, mais décalées l'une par rapport à l'autre de telle manière qu'un des équipages 16 exécute un mouvement de retour en direction amont A pendant que l'autre équipage 16 exécute un mouvement d'avance en direction aval Z. Dans le but d'obtenir un mouvement de translation continu de vitesse toujours constante, les parties 18Z et 19Z commandant les mouvements d'avance des équipages mobiles 16 sont plus longs que les parties des rainures 18a et 19a commandant les mouvements de retour. De cette manière, au moins un des équipages mobiles 16 est toujours en train d'exécuter un mouvement d'avance en direction aval pendant lequel la pince correspondante est bloquée sur la barre 2. La barre 2 est donc continuellement entraînée vers l'aval Z par l'une ou l'autre, ou pendant de courts instants, par les deux pinces tournantes des deux équipages mobiles 16.

Lorsqu'une telle précision n'est pas nécessaire, par exemple pour des barres très lourdes dont l'inertie accumulée pendant le mouvement d'avance surmonte sans pertes notables le freinage d'une pince qui s'ouvre automatiquement pendant la période de recul rapide, il n'st pas nécessaire de prévoir deux équipages 16; un seul suffit. Dans ce cas, pour faciliter un mouvement de reculrapide de chaque équipage mobile 16, un ressort, non montré, disposé parallèlement aux guides 14 et 15 est armé pendant le mouvement d'avance et fournit la poussée nécessaire à l'accélération du mouvement de recul d'un unique équipage 16.

Dans ce cas, une seule rainure 30A, 30Z (Fig. 4) peut être creusée dans la surface cylindrique de la came 10 et la partie 30A de la rainure, responsable pour le mouvement en direction amont A peut être choisie très raide, presque parallèle à l'axe de la came 10, puisque le ressort fournit l'énergie nécessaire pour exécuter le mouvement de recul rapide de l'équipage mobile.

Si dans ce dernier cas, plusieurs dispositifs D sont prévus sur le chemin de la barre 2, on s'arrange évidemment pour décaler les mouvements de recul d'un dispositif à l'autre de manière à obtenir à nouveau une avance continue, toujours constante.

Pour une vitesse de l'arbre 4 donnée, la vitesse du mouvement de translation peut être réglée en intervenant soit au niveau du réducteur 5, soit en changeant les roues 6, 7, 8, 9.

La vitesse du mouvement de rotation peut être réglée, le plus facilement en changeant les roues 12 et 13. Eventuellement, le mouvement de rotation peut être désolidarisé totalement du mouvement de translation au moyen d'un entraînement séparé, indépendant.

La vitesse de l'arbre 4 qui commande de manière précise l'une et l'autre des vitesses de translation et de rotation du mouvement de la barre 2 peut être maintenue constante à peu de frais avec une précision largement suffisante pour assurer un chauffage très uniforme de la barre dans les inducteurs 3.

Lorsque, en raison de longues portées entre deux dispositifs D voisins ou en raison de la température élevée de la barre, cette dernière montre une tendance à présenter une flèche sensible, des couronnes de guidage G coaxiales avec l'axe idéal de la barre peuvent être disposés entre deux inducteurs consécutifs ou en amont ou aval d'un des dispositifs D. Ces couronnes de guidage G peuvent être constituées de trois guides à patins frotteurs ou à une ou deux billes chacun, placés à 120° autour de la barre 2 et serrés contre celle-ci. Ces couronnes sont ajustées pour être coaxiales avec l'axe idéal de la barre 2 et permettent d'empêcher ou même de redresser une flèche de la barre 2 pendant son avancement et sa rotation.

Il est possible d'envisager d'autres mécanismes transformant un mouvement de rotation à vitesse constante en un mouvement de va et vient comprenant des phases à vitesse constante que l'ensemble came 10 et éperon 17 engagé dans une rainure de la came 10. De tels mécanismes sont, par exemple, réalisables au moyen de dispositifs à crémaillère à trajet fermé sur lui-même tel que celui décrit dans le brevet belge No. 860999 ou au moyen d'un entraînement à chaîne tel que celui décrit dans le brevet belge No. 855441.

## Revendications

1. Installation de chauffage par induction comprenant au moins un inducteur (3) et au moins un dispositif (D) pour faire avancer une barre à travers l'inducteur ou les inducteurs (3) en un mouvement de translation axial combiné avec un mouvement de rotation, caractérisée en ce que le dispositif (D) pour faire avancer la barre (2) en un mouvement de translation axial combiné avec un mouvement de rotation autour de l'axe de la barre est constitué par un mécanisme (10, 17) transformant un mouvement rotatif d'un arbre (4) à vitesse constante en un mouvement de va et vient comprenant des phases à vitesse constante, par au moins un équipage de translation (16) auquel est communiqué ce mouvement et par un support annulaire (22) de pince, maintenu dans un palier de l'équipage de translation (16) et animé d'un mouvement rotatif à vitesse constante.

2. Installation suivant la revendication 1, caractérisée en ce que le mécanisme transformant un mouvement rotatif d'un arbre (4) est constitué par une came (10) à rainure dans laquelle est engagé un éperon (17) de l'équipage mobile (16).

3. Installation suivant une des revendications 1 ou 2, caractérisée en ce que le support annulaire (22) est accouplé au même arbre (4) que celui qui entraîne le mécanisme (10, 17) transformant un mouvement rotatif en un mouvement de va et vient.

4. Installation de chauffage suivant une des revendications 1, 2 ou 3, caractérisé en ce qu'elle comprend plusieurs dispositifs (D) pour faire avancer une barre en un mouvement de translation axial combiné avec un mouvement de rotation, les mécanismes (17, 10) de tous les dispositifs (D) étant accouplés à un même arbre rotatif (4).

5. Installation de chauffage suivant une des revendications précédentes caractérisée en ce que les mouvements de va et vient de deux dispositifs (D) voisins sont décalés l'un par rapport à l'autre pour que le retour de l'un se fasse pendant l'avance de l'autre.

6. Installation suivant une des revendications 1 à 4, caractérisée en ce que le dit mécanisme comprend deux équipages de translation (16) animés d'un mouvement de va et vient décalés l'un par rapport à l'autre pour que le retour de l'un se fasse pendant l'avance de l'autre.

7. Installation suivant une des revendications 5 ou 6 caractérisée en ce que les équipages mobiles (16) exécutant des mouvements de va et vient décalés l'un par rapport à l'autre sont déplacés dans le même sens au début et à la fin de chaque mouvement d'avance.

8. Installation suivant une des revendications précédentes caractérisée en ce que le support annulaire (22) porte des mordaches (24) autoserrantes.

9. Installation suivant une des revendications précédentes caractérisée en ce que l'accouplement de la came (10) à l'arbre (4) animé d'un mouvement de rotation se fait au moyen d'un réducteur de vitesse (5).

10. Installation suivant une des revendications précédentes caractérisée en ce que l'accouplement du support annulaire (22) à l'arbre (4) se fait par l'intermédiaire d'un arbre cannelé (11) sur lequel coulissent des manchons rotatifs (20).

11. Installation suivant une des revendications précédentes, caractérisée en ce que en dehors des dispositifs (D) pour faire avancer la barre en un mouvement de translation axial combiné avec un mouvement de rotation, la barre est guidée par des couronnes de billes appliquées sur elle de manière serrante et disposées de manière à être coaxiales par rapport à l'axe idéal de la barre.

## Claims

1. Induction heating installation comprising at least one inductor (3) and at least one device (D) for moving a bar along through the inductor or the inductors (3) in an axial translational movement combined with a rotary movement, characterised in that the device (D) for moving the bar (2) along in an axial translational movement combined with a rotary movement about the axis of the bar consists of a mechanism (10, 17) converting a rotary movement of a constant-speed shaft (4) into a to-and-fro movement comprising constant-speed phases, by at least one translational element (16) to which this movement is communicated, and by an annular gripper support (22) held in a bearing of the translational element (16) and driven in a constant-speed rotary movement.

2. Installation according to Claim 1, characterised in that the mechanism converting a rotary movement of a shaft (4) consists of a grooved cam (10) in which a spur (17) of the movable element (16) is engaged.

3. Installation according to one of Claims 1 or 2, characterised in that the annular support (22) is coupled to the same shaft (4) as that which drives the mechanism (10, 17) converting a rotary movement into a to-and-fro movement.

4. Heating installation according to one of Claims 1, 2 or 3, characterised in that it comprises several devices (D) for moving a bar along in an axial translational movement combined with a rotary movement, the mechanism (17, 10) of all the devices (D) being coupled to one and the same rotary shaft (4).

5. Heating installation according to one of the preceding claims, characterised in that the to-and-fro movements of two adjacent devices (D) are staggered relative to one another, so that the return of one takes place during the advance of the other.

6. Installation according to one of Claims 1 to 4, characterised in that said mechanism comprises two translational elements (16) which are driven in to-and-fro movements staggered relative to one another, so that the return of one takes place during the advance of the other.

7. Installation according to one of Claims 5 or 6, characterised in that the movable elements (16) executing to-and-fro movements staggered relative to one another are displaced in the same direction at the start and at the end of each advancing movement.

8. Installation according to one of the preceding claims, characterised in that the annular support (22) carries self-clamping jaws (24).

9. Installation according to one of the preceding claims, characterised in that the coupling of the cam (10) to the shaft (4) driven in a rotary movement is effected by means of a speed reducer (5).

10. Installation according to one of the preceding claims, characterised in that the coupling of the annular support (22) to the shaft (4) is effected by means of a splined shaft (11), on which rotary sleeves (20) slide.

11. Installation according to one of the preceding claims, characterised in that, outside the devices (D) for moving the bar along in an axial translational movement combined with a rotary movement, the bar is guided by ball races bearing on it so as to grip it and arranged so as to be coaxial relative to the ideal axis of the bar.

**Patentansprüche**

1. Induktionserhitzungsanlage mit wenigstens einem Induktor (3) und wenigstens einer Vorrichtung (D) zum Hindurchschieben einer Stange durch den Induktor bzw. die Induktoren (3) mit einer axialen Transversalbewegung, die mit einer Rotationsbewegung kombiniert ist, dadurch gekennzeichnet, daß die Vorrichtung (D) zum Vorschieben der Stange (2) mit einer axialen Translationsbewegung, die mit einer Rotationsbewegung um die Achse der Stange kombiniert ist, gebildet ist aus einem Mechanismus (10, 17), der eine Rotationsbewegung einer Welle (4) mit konstanter Geschwindigkeit in eine Hin- und Herbewegung umwandelt, die Phasen mit konstanter Geschwindigkeit aufweist, und zwar mittels wenigstens einer Translationseinheit (16), der diese Bewegung erteilt wird, und mittels einer ringförmigen Zangenhalterung (22), die in einem Lager der Translationseinheit (16) gehalten ist und eine Rotationsbewegung mit konstanter Geschwindigkeit ausführt.

2. Anlage nach Anspruch 1, dadurch gekennzeichnet, daß der die Rotationsbewegung einer Welle (4) umwandelnde Mechanismus aus einem Nocken (10) mit einer Rille gebildet ist, in der ein Zapfen (17) der beweglichen Einheit (16) in Eingriff ist.

3. Anlage nach Anspruch 1 oder 2, dadurch gekennzeichnet, daß die ringförmige Halterung (22) an dieselbe Welle (4) angekoppelt ist, die auch den Mechanismus (10, 17) antreibt, welcher eine Rotationsbewegung in eine Hin- und Herbewegung umwandelt.

4. Erhitzungsanlage nach einem der Ansprüche 1 bis 3, dadurch gekennzeichnet, daß sie mehrere Vorrichtungen (D) zum Vorschieben einer Stange mit einer axialen Translationsbewegung, die mit einer Rotationsbewegung kombiniert ist, umfaßt, wobei die Mechanismen (17, 10) aller Vorrichtungen (D) an dieselbe rotierende Welle (4) angekoppelt sind.

5. Erhitzungsanlage nach einem der vorstehenden Ansprüche, dadurch gekennzeichnet, daß die Hin- und Herbewegungen von zwei benachbarten Vorrichtungen (D) gegeneinander versetzt sind, so daß die Rückbewegung der einen während der Vorwärtsbewegung der anderen stattfindet.

6. Anlage nach einem der Ansprüche 1 bis 4, dadurch gekennzeichnet, daß der Mechanismus zwei Translationseinheiten (16) umfaßt, die gegeneinander versetzte Hin- und Herbewegungen ausführen, so daß die Rückbewegung der einen während der Vorwärtsbewegung der anderen stattfindet.

7. Anlage nach Anspruch 5 oder 6, dadurch gekennzeichnet, daß die beweglichen, gegeneinander versetzte Hin- und Herbewegungen ausführenden Einheiten (16) am Anfang und am Ende jeder Vorschubbewegung in demselben Sinn verschoben werden.

8. Anlage nach einem der vorstehenden Ansprüche, dadurch gekennzeichnet, daß die ringförmige Halterung (22) selbsttätig spannende Spannbacken (24) trägt.

9. Anlage nach einem der vorstehenden Ansprüche, dadurch gekennzeichnet, daß die Ankopplung des Nockens (10) an die eine Rotationsbewegung ausführende Welle (4) über ein Untersetzungsgetriebe (5) erfolgt.

10. Anlage nach einem der vorstehenden Ansprüche, dadurch gekennzeichnet, daß die Ankopplung der ringförmigen Halterung (22) an die Welle (4) über eine geriffelte Welle (11) erfolgt, auf der drehbare Buchsen (20) gleiten.

11. Anlage nach einem der vorstehenden Ansprüche, dadurch gekennzeichnet, daß die Stange außerhalb der Vorrichtungen (D) zum Vorschieben der Stange mit einer axialen Translationsbewegung, die mit einer Rotationsbewegung kombiniert ist, durch Kugelringe geführt ist, die unter Spannwirkung auf sie aufgesetzt sind und so angeordnet sind, daß sie koaxial zur idealen Achse der Stange sind.

Fig. 1

Fig. 2 a

Fig.2b

18a 18z

19z 19a

10

Fig.3

30z

30a

30z

10

Fig.4

Fig.5